# EUROPEAN PATENT SPECIFICATION

(11) **EP 4 213 561 B1**
(45) Date of publication and mention of the grant of the patent: **07.10.2026**
(21) Application number: 21866414.2
(22) Date of filing: 30.07.2021
(51) Int. Cl.: H04W 48/16, H04W 76/10, H04W 8/24, H04W 84/12

(54) **COMMUNICATION DEVICE, CONTROL METHOD, AND PROGRAM**
KOMMUNIKATIONSVORRICHTUNG, STEUERUNGSVERFAHREN UND PROGRAMM
DISPOSITIF DE COMMUNICATION, PROCÉDÉ DE COMMANDE ET PROGRAMME

(30) Priority: 08.09.2020 JP 2020150739
(43) Date of publication of application: 19.07.2023
(60) Divisional application: 26201368.3
(73) Proprietor: CANON KABUSHIKI KAISHA, Tokyo 146-8501 (JP)
(72) Inventor: INOHIZA, Hirohiko, Tokyo 146-8501 (JP)
(74) Representative: Canon Europe Limited
(86) International application number: PCT/JP2021/028363
(87) International publication number: WO 2022/054454

(56) References cited:
- JP-A- 2010 011 397
- US-A1- 2013 083 762

## Description

### TECHNICAL FIELD

The present invention relates to a connection control technique in a wireless LAN.

### BACKGROUND ART

As communication standards concerning a wireless LAN (Wireless Local Area Network), IEEE (Institute of Electrical and Electronics Engineers) 802.11 standards are known. The IEEE802.11 standards are the standard series including IEEE802.11a/b/g/n/ac/ax standards. PTL 1 describes that communication using OFDMA (Orthogonal Frequency-Division Multiple Access) is performed in the IEEE802.11ax standard. In wireless communication using OFDMA, high peak throughput can be implemented.

Presently, to further improve throughput, the IEEE802.11be standard has been defined as a new standard of the IEEE802.11 standard series. In the IEEE802.11be standard, multi-link communication in which one access point (AP) executes communication by establishing, with one station (STA), a plurality of radio links in a plurality of frequency bands has been examined. In multi-link communication, for example, an AP establishes, with an STA, connections using a plurality of frequency channels in the 2.4-, 5-, or 6-GHz band, and communicates with the STA using the frequency channels simultaneously.

### CITATION LIST

### PATENT LITERATURE

PTL 1: Japanese Patent Laid-Open No. 2018-050133

US2013/0083762 A1 discloses A wireless communication apparatus which can simultaneously conduct communication on at least two frequency channels is described. The apparatus includes a communication unit which refers to a connection management table to determine a communication system which can be used by a wireless communication terminal using an identifier of the wireless communication terminal, and conducts communication with the wireless communication terminal on a second frequency channel using the communication system, when a request from the wireless communication terminal to change the first frequency channel to the second frequency channel is permitted.

### SUMMARY OF INVENTION

### TECHNICAL PROBLEM

Even in a multi-link communication environment, it can be assumed a case in which there may exist an AP and an STA that cannot perform a reception operation in another link while performing a transmission operation in a predetermined link due to the hardware constraints of the wireless communication apparatuses. In such case, using a plurality of frequency channels, the AP may be connected to STAs, each of which can use a single frequency channel. In this case, if each of the STAs transmits a signal by paying attention to only the connected frequency channel, when the AP transmits a signal using a given frequency channel, a signal may arrive in another frequency channel, and thus the AP may not be able to receive the signal.

### SOLUTION TO PROBLEM

The present invention provides a communication control technique of preventing, while performing a transmission operation using one of a plurality of frequency channels, a reception operation using another frequency channel.

A communication apparatus according to one aspect of the present invention is provided by claim 1. Preferable features are provided by claims 2 to 12. A control method according to another aspect of the present invention is provided by claim 13. A program according to further aspect of the present invention is provided by claim 14.

### ADVANTAGEOUS EFFECTS OF INVENTION

According to the present invention, it is possible to prevent, while performing a transmission operation using one of a plurality of frequency channels, a reception operation using another frequency channel.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a block diagram showing an example of the hardware arrangement of an AP;
Fig. 3 is a block diagram showing an example of the functional arrangement of the AP;
Fig. 4 is a sequence chart showing the first example of the procedure of connection processing;
Fig. 5 is a sequence chart showing the second example of the procedure of the connection processing;
Fig. 6 is a sequence chart showing the third example of the procedure of the connection processing;
Fig. 7 is a sequence chart showing the fourth example of the procedure of the connection processing;
Fig. 8 is a flowchart illustrating an example of the procedure of Probe Request frame reception processing;
Fig. 9 is a flowchart illustrating an example of the procedure of Association Request frame reception processing; and
Fig. 10 is a flowchart illustrating an example of the procedure of processing of deciding a channel of a primary link.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Configuration of System)

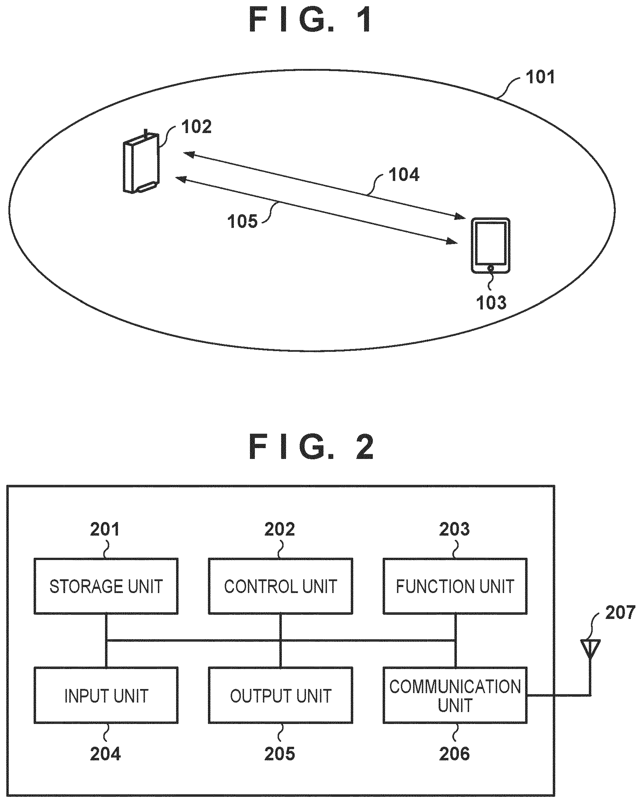

Fig. 1 shows an example of the configuration of a wireless communication system according to an embodiment. The wireless communication system includes, as wireless communication apparatuses, one access point (AP 102) and one station (STA 103) of a wireless LAN, and performs wireless communication when the STA 103 joins a network 101 formed by the AP 102. As one example, assume that the STA 103 is configured to execute multi-link communication in which a plurality of radio links with the AP 102 are established to perform communication, and can transmit/receive a frame in each of the plurality of radio links. Fig. 1 shows an example in a case in which two links of a first link 104 and a second link 105 are used. In each link, channels in the frequency bands of the 2.4-, 5-, and 6-GHz bands can be used. Note that a use frequency band is not limited to them, and a different frequency band such as the 60-GHz band may be used. In accordance with the capability information of multi-link communication between the STA and the AP, channels in the 2.4- and 5-GHz bands may be used in combination or a plurality of channels selected from the 6-GHz band may be used in combination. Multi-link communication may be executed using a plurality of channels in one frequency band. Note that Fig. 1 shows one example, and a number of STAs may exist and another PA may exist. The positional relationship between the AP and the STA may be different from that shown in Fig. 1.

Assume that the AP 102 is configured to execute multi-link communication and not to execute a reception operation in the second link different from the first link while performing a transmission operation in the first link. In this embodiment, the AP 102 determines a primary link from the plurality of links and connects, for example, a specific kind of STA to the primary link. In this example, the specific kind of STA can be, for example, an STA complying with a standard, such as the IEEE802.11ax standard, of a version older than the IEEE802.11be standard or an IEEE802.11be STA that is operable only in a single link. Note that the AP 102 may connect not only the specific kind of STA but also all the STAs to the primary link. This allows the AP 102 to control a transmission timing in a channel of a non-primary link in accordance with a timing of receiving a signal from an STA that performs channel access in the primary link. As a result, it is possible to prevent a transmission opportunity in one link from occurring simultaneously with a reception opportunity in another link. In this embodiment, examples of the arrangement of the AP 102 that connects an STA to the primary link and control processing executed by the AP 102 will be described.

Note that this embodiment will describe the arrangement and processing of the AP 102 but the STA may execute at least part of the following processing or the following processing may be executed in a wireless communication system other than a wireless LAN complying with the IEEE802.11 standard. That is, the processing executed by the AP 102 to be described below may be executed by an arbitrary wireless communication apparatus in an arbitrary wireless communication system.

### (Arrangement of Apparatus)

Fig. 2 is a block diagram showing an example of the hardware arrangement of the AP 102 according to this embodiment. The AP 102 includes, for example, a storage unit 201, a control unit 202, a function unit 203, an input unit 204, an output unit 205, a communication unit 206, and an antenna 207. Note that the STA 103 can have the same arrangement as in the AP 102.

The storage unit 201 includes one or more memories such as a ROM and a RAM, and stores computer programs configured to perform various kinds of operations to be described later and various kinds of information such as communication parameters for wireless communication. Note that ROM is an acronym for Read Only Memory, and RAM is an acronym for Random Access Memory. Note that, in addition to or instead of the memory such as the ROM or the RAM, the storage unit 201 may include a storage medium such as a flexible disk, a hard disk, an optical disk, a magnetooptical disk, a CD-ROM, a CD-R, a magnetic tape, a nonvolatile memory card, or a DVD. The storage unit 201 may include a plurality of memories.

The control unit 202 is formed by, for example, one or more processors such as a CPU and an MPU, and controls the whole AP 102 by executing, for example, computer programs stored in the storage unit 201. Note that CPU is an acronym for Central Processing Unit, and MPU is an acronym for Micro Processing Unit. The control unit 202 can be configured to execute processing of generating data or signals to be transmitted in communication with another communication apparatus (for example, the STA 103) in addition to control of the whole AP 102. Note that the control unit 202 may be configured to execute processing such as control of the whole AP 102 by, for example, cooperation of the computer programs stored in the storage unit 201 and an OS (Operating System). The control unit 202 may include a plurality of processors such as a multi-core processor, and execute processing such as control of the whole AP 102 by the plurality of processors. Furthermore, the control unit 202 may be formed by an ASIC (Application Specific Integrated Circuit), a DSP (Digital Signal Processor), an FPGA (Field Programmable Gate Array), or the like.

The control unit 202 controls the function unit 203 to execute predetermined processing such as image capturing, printing, or projection. The function unit 203 is hardware used by the AP 102 to execute predetermined processing. For example, in a case in which the AP 102 is a camera, the function unit 203 is an image capturing unit and performs image capturing processing. For example, in a case in which the AP 102 is a printer, the function unit 203 is a printing unit and performs print processing. For example, in a case in which the AP 102 is a projector, the function unit 203 is a projection unit and performs projection processing. Data to be processed by the function unit 203 may be data stored in the storage unit 201, or may be data communicated with another communication apparatus (for example, the STA 103) via the communication unit 206 (to be described later).

The input unit 204 accepts various operations from a user. The output unit 205 performs various kinds of outputs to the user. In this example, the output by the output unit 205 includes, for example, at least one of display on a screen, audio output by a loudspeaker, vibration output, and the like. Note that both the input unit 204 and the output unit 205 may be implemented by one module, like a touch panel. Each of the input unit 204 and the output unit 205 may be incorporated in the AP 102 or may be formed as an external apparatus connected to the communication apparatus.

The communication unit 206 controls wireless communication complying with the IEEE802.11 standard series, or controls IP communication. In this embodiment, the communication unit 206 is particularly configured to control wireless communication complying with the IEEE802.11be standard. The communication unit 206 controls the antenna 207 to, for example, transmit/receive signals for wireless communication, which have been generated by the control unit 202. The AP 102 communicates data such as image data, document data, or video data with a communication partner apparatus (for example, the STA 103) via the communication unit 206. Note that the antenna 207 may be prepared separately from the communication unit 206, or may be combined with the communication unit 206 to form one module.

The antenna 207 is an antenna capable of performing communication in each of the sub-GHz band, 2.4-GHz band, 5-GHz band, and 6-GHz band. Note that the AP 102 may include a multi-band antenna as the antenna 207, or may include a plurality of antennas respectively corresponding to the frequency bands. If the AP 102 includes a plurality of antennas, it may include one communication unit 206 for the plurality of antennas or a plurality of communication units 206 respectively corresponding to the plurality of antennas. Note that the antenna 207 may be a single antenna or an antenna array. That is, the antenna 207 may include a plurality of antenna elements, and may be configured to execute, for example, MIMO (Multi-Input and Multi-Output) communication.

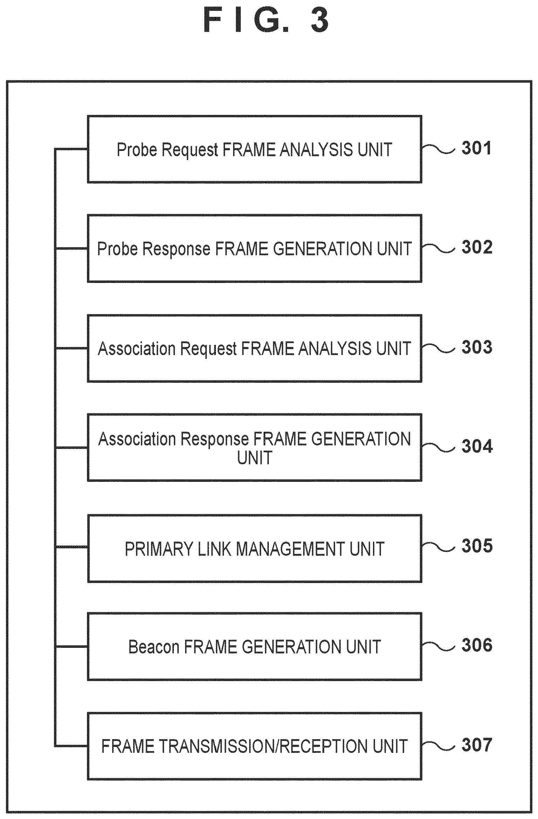

Fig. 3 shows an example of the functional arrangement of the AP 102. The AP 102 includes, as functional components, for example, a Probe Request frame analysis unit 301 and a Probe Response frame generation unit 302. Furthermore, the AP 102 includes an Association Request frame analysis unit 303 and an Association Response frame generation unit 304. The AP 102 also includes a primary link management unit 305, a Beacon frame generation unit 306, and a frame transmission/reception unit 307. Each function shown in Fig. 3 can be implemented when, for example, the control unit 202 executes the program stored in the storage unit 201. Alternatively, a dedicated hardware component for implementing each function may be prepared. For example, some or all of the functions shown in Fig. 3 may be implemented as the functions of the communication unit 206. In one example, each function shown in Fig. 3 may be implemented when the control unit 202 controls the communication unit 206.

The Probe Request frame analysis unit 301 analyzes a Probe Request frame that has been transmitted by an STA existing on the periphery to search for an AP and received by the AP 102. The probe Request frame can include a Multi Link element indicating whether the STA as the transmission source supports multi-link communication. The probe Request frame can also include a Multi Band element as information of the frequency band and the channel supported by the STA as the transmission source, and capability information indicating whether the STA supports a channel switch. The AP 102 can specify the capability of the STA as the transmission source of the Probe Request frame by the analysis by the Probe Request frame analysis unit 301.

The Probe Response frame generation unit 302 generates a Probe Response frame to be transmitted to the STA as the transmission source of the Probe Request frame. The Probe Response frame can include, for example, a Multi Link element indicating channel information of the primary link determined by the AP 102. The Probe Response frame includes information for instructing the STA to perform a channel switch. This information is a Channel Switch Announcement element or an Extended Channel Switch Announcement element.

The Association Request frame analysis unit 303 analyzes an Association Request frame that has been transmitted from the STA to the AP 102 to request connection to the AP 102 and received by the AP 102. The Association Request frame can include a Multi Link element indicating whether the STA as the transmission source supports multi-link communication. The Association Request frame can include a Multi Band element as information of the frequency band and the channel supported by the STA as the transmission source and capability information indicating whether the STA supports a channel switch. The AP 102 can specify the capability of the STA as the transmission source of the Association Request frame by the analysis by the Association Request frame analysis unit 303. Note that the AP 102 can acquire information of the STA by one of the Probe Request frame and the Association Request frame. That is, the STA may transmit only one of the Probe Request frame and the Association Request frame by including the information of the self-apparatus.

The Association Response frame generation unit 304 generates an Association Response frame to be transmitted to the STA as the transmission source of the Association Request frame. The Association Response frame includes a status code indicating a connection result.

The primary link management unit 305 decides a frequency channel to be used in the primary link. The primary link management unit 305 can set a fixed channel as the channel of the primary link at the time of, for example, initializing the AP 102. Furthermore, the primary link management unit 305 may dynamically change the channel of the primary link in accordance with the information of the frequency band in which the connected STA is operable.

The Beacon frame generation unit 306 generates a Beacon frame to be transmitted to the surroundings. An STA existing on the periphery of the AP 102 can confirm the existence of the AP 102 by receiving the Beacon frame, and acquire the information of the AP 102. In this embodiment, the Beacon frame includes a Multi Link element indicating the channel information of the primary link determined by the AP 102.

The frame transmission/reception unit 307 executes transmission/reception of various kinds of MAC (Medium Access Control) frames and data frames. For example, the frame transmission/reception unit 307 transmits the Beacon frame generated by the Beacon frame generation unit 306. Upon receiving the Probe Request frame, the frame transmission/reception unit 307 transfers the frame to the Probe Request frame analysis unit 301. Similarly, upon receiving the Association Request frame, the frame transmission/reception unit 307 transfers the frame to the Association Request frame analysis unit 303. Furthermore, the frame transmission/reception unit 307 transmits the frame generated by the Probe Response frame generation unit 302 or the Association Response frame generation unit 304 to the STA.

### (Procedure of Processing in System)

Subsequently, some examples of the processing executed in the wireless communication system according to this embodiment will be described. In the following description, assume that the AP 102 and the STA 103 can communicate with each other using the 2.4- and 5-GHz bands, and the AP 102 is configured not to execute, while executing a transmission operation in one link, a reception operation in the other link. Note that the use of the 2.4- and 5-GHz bands is merely an example, and the following discussion is applicable to another combination of frequency bands. The following discussion is similarly applicable to a case in which two or more different channels in the same frequency band are used. For example, the AP 102 may be configured to function as two access points so as to perform communication by establishing radio links in two frequency bands, respectively. For example, the AP 102 may be configured to perform communication in each frequency band using two physically separated communication circuits or may be configured to perform communication in each frequency band using one physical communication circuit that is logically divided into two circuits. At this time, the AP 102 decides, as the primary link, a link formed using the channel in the 2.4-GHz band, and executes processing of connecting, using the primary link, the STA 103 that attempts connection.

The following processing is started when, for example, each of the AP 102 and the STA 103 is powered on. This processing may be started when a user or an application instructs to start multi-link communication in at least one of the AP 102 and the STA 103. Alternatively, this processing may be started when the amount of data to be communicated with a partner apparatus becomes equal to or larger than a predetermined threshold in at least one of the AP 102 and the STA 103. Note that the following processing can be implemented when, for example, the control unit 202 of the AP 102 (and the STA 103) executes the program stored in the storage unit 201.

### <Processing Example 1>

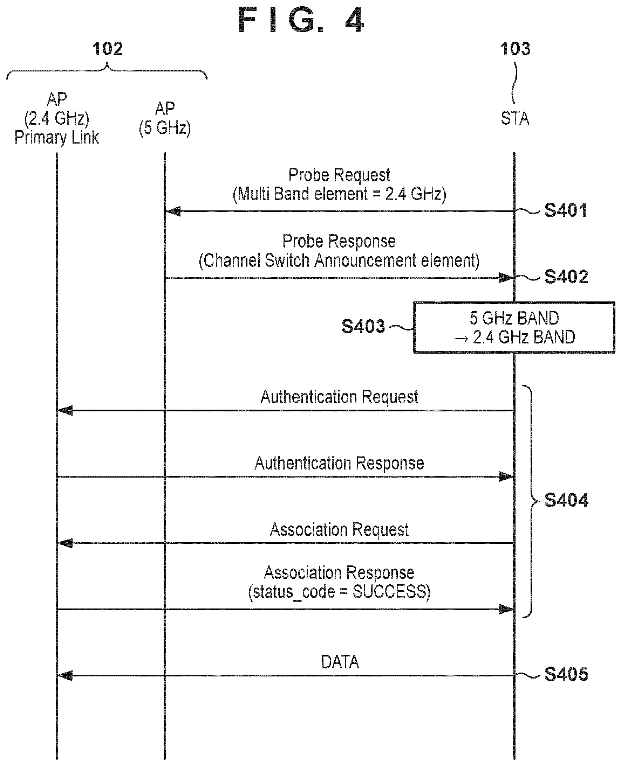

Fig. 4 shows the first example of the procedure of the processing executed when connection between the AP 102 and the STA 103 is established. In this processing, if the AP 102 receives a Probe Request frame from a predetermined STA in a non-primary link, it transmits a Probe Response frame to instruct the STA 103 to switch the operating channel. The predetermined STA is, for example, an STA operating in a single link complying with a standard, such as the IEEE802.11ax standard, of a version older than the IEEE802.11be standard, or an STA complying with the IEEE802.11be standard and operating only in a single link. In the following description, the STA 103 is an STA operating in a single link, and operates in the 5-GHz band.

First, the STA 103 transmits a Probe Request frame including a Multi Band element indicating information of the supported frequency band and channel (S401), and requests information (for example, capability information) of the AP 102. Note that the STA 103 transmits the Probe Request Frame in which the 2.4-GHz band is set as the supported frequency band information.

Upon receiving the Probe Request frame, the AP 102 analyzes the frame. Then, the AP 102 recognizes, from the information of the Multi Band element, whether the STA 103 is operable in the channel (2.4-GHz band) of the primary link. In this example, the AP 102 recognizes that the STA 103 is operable in the channel of the primary link. Thus, the AP 102 generates a Probe Response frame including an information element for switching the operating channel of the STA 103 to the channel of the primary link, and transmits the frame to the STA 103 (S402). This information element is, for example, a Channel Switch Announcement element.

Upon receiving the Probe Response frame, the STA 103 switches the operating frequency band from the 5-GHz band to the 2.4-GHz band, and starts an operation in the channel of the primary link (S403). After that, radio link establishment processing is executed in the 2.4-GHz band between the AP 102 and the STA 103 (S404). In the link establishment processing, an Authentication Request frame and an Authentication Response frame are exchanged between the AP 102 and the STA 103 to perform authentication. Furthermore, an Association Request frame and an Association Response frame are exchanged between the AP 102 and the STA 103 to perform connection processing. In this processing example, if the AP 102 transmits, to the STA 103, the Association Response frame in which SUCCESS indicating connection success is set as a status code indicating a connection result, the connection processing is completed. After the completion of the link establishment processing, for example, the STA 103 can transmit a data frame (S405). As described above, in the example shown in Fig. 4, the AP 102 causes the STA 103 to switch the operating channel to the channel of the primary link before executing the link establishment processing (S404). This allows the AP 102 to establish connection to the STA 103 in the channel of the primary link.

### <Processing Example 2>

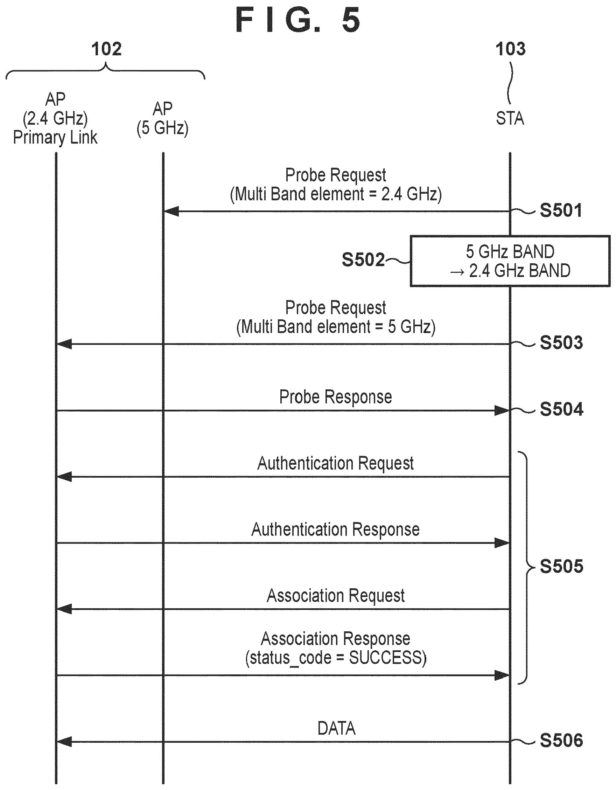

Subsequently, the second example of the procedure of the processing executed when connection is established between the AP 102 and the STA 103 will be described with reference to Fig. 5. In this processing example, if the AP 102 receives a Probe Request frame from the STA 103 in a non-primary link, it does not respond using a Probe Response frame. If the STA 103 receives no Probe Response frame, it changes the operating frequency, and retransmits the Probe Request frame using a channel in another frequency band. This allows the AP 102 to shift the operating frequency of the STA 103 to the frequency band of the primary link, thereby establishing connection using the channel of the primary link.

In this processing, the STA 103 transmits a Probe Request frame including a Multi Band element indicating information of the supported frequency band and channel in the 5-GHz band as the operating frequency band (S501). S501 is the same as S401 of Fig. 4. The AP 102 analyzes the Probe Request frame, and recognizes, from the information of the Multi Band element, that the STA 103 is operable in the channel of the primary link. Then, the AP 102 does not respond using a Probe Response Frame to shift the operating frequency of the STA 103 to the 2.4-GHz band.

If the STA 103 cannot receive the Probe Response frame in the 5-GHz band within, for example, a predetermined period since the Probe Request frame is transmitted, the STA 103 switches the operating channel to the frequency band of the 2.4-GHz band (S502). Then, the STA 103 transmits a Probe Request frame including a Multi Band element indicating information of the supported frequency band and channel in the 2.4-GHz band (S503). At this time, information indicating the 5-GHz band is set as the supported frequency band information. Thus, the AP 102 receives the Probe Request frame in the 5-GHz band as the primary link.

If the AP 102 receives the Probe Request frame in the primary link, it transmits a Probe Response frame to permit connection of the STA 103 (S504). After that, link establishment processing is executed (S505), and data is transmitted/received (S506). These processes are the same as those in S404 and S405 of Fig. 4. As described above, in the example shown in Fig. 5 as well, the AP 102 causes the STA 103 to switch the operating channel to the channel of the primary link before executing the link establishment processing (S505). This allows the AP 102 to establish connection to the STA 103 in the channel of the primary link.

### <Processing Example 3>

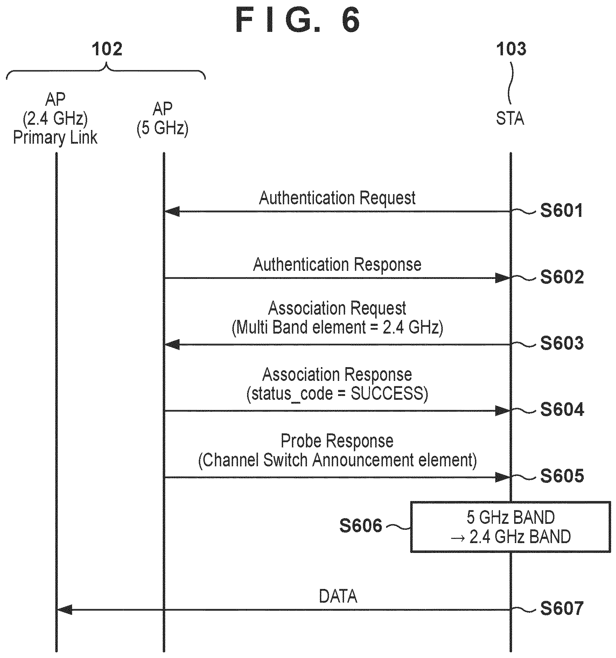

In each of the above-described processing examples 1 and 2, a case in which the operating frequency of the STA 103 is changed before the link establishment processing has been explained but the operating frequency can be changed after the link establishment processing. In this processing example, such processing will be described with reference to Fig. 6. In this processing, the STA 103 transmits an Association Request frame in a non-primary link. Upon receiving the Association Request frame, the AP 102 establishes connection, and then transmits a Probe Response frame to the STA 103 to instruct to switch the operating channel of the STA 103. This allows the AP 102 to shift the operating frequency of the STA 103 to the frequency band of the primary link after the connection is established, thereby executing communication in the channel of the primary link. Note that in this processing example, before the link establishment processing, the AP 102 and the STA 103 transmit/receive the Probe Request frame and the Probe Response frame.

In this processing, the AP 102 and the STA 103 execute processing for authentication in a non-primary link. That is, the STA 103 transmits an Authentication Request frame to the AP 102 in the 5-GHz band (S601). Then, the AP 102 transmits an Authentication Response frame as a response to the STA 103 in the 5-GHz band (S602). Next, the STA 103 transmits, in the 5-GHz band, an Association Request frame including a Multi Band element indicating information of the frequency band and the channel supported by itself, and requests the AP 102 to perform connection (S603). In this example, information indicating the 2.4-GHz band is set as the supported frequency band information.

Upon receiving the Association Request frame, the AP 102 analyzes the frame. The AP 102 recognizes, from the information of the Multi Band element in the frame, that the STA 103 is operable in the channel (2.4-GHz band) of the primary link. In response to this, the AP 102 transmits, to the STA 103, an Association Response frame in which SUCCESS indicating connection success is set as a status code indicating a connection result (S604). Subsequently, the AP 102 transmits a Probe Response frame including a Channel Switch Announcement element to switch the operating channel of the STA 103 to the channel of the primary link (S605). Upon receiving the Probe Response frame, the STA 103 switches the operating frequency band from the 5-GHz band to the 2.4-GHz band, and starts an operation in the channel of the primary link (S606). After that, data is transmitted/received between the AP 102 and the STA 103 (S607).

As described above, in the example shown in Fig. 6, the AP 102 causes the STA 103 to switch the operating channel to the channel of the primary link after executing the link establishment processing. This allows the AP 102 to establish connection to the STA 103 in the channel of the primary link.

### <Processing Example 4>

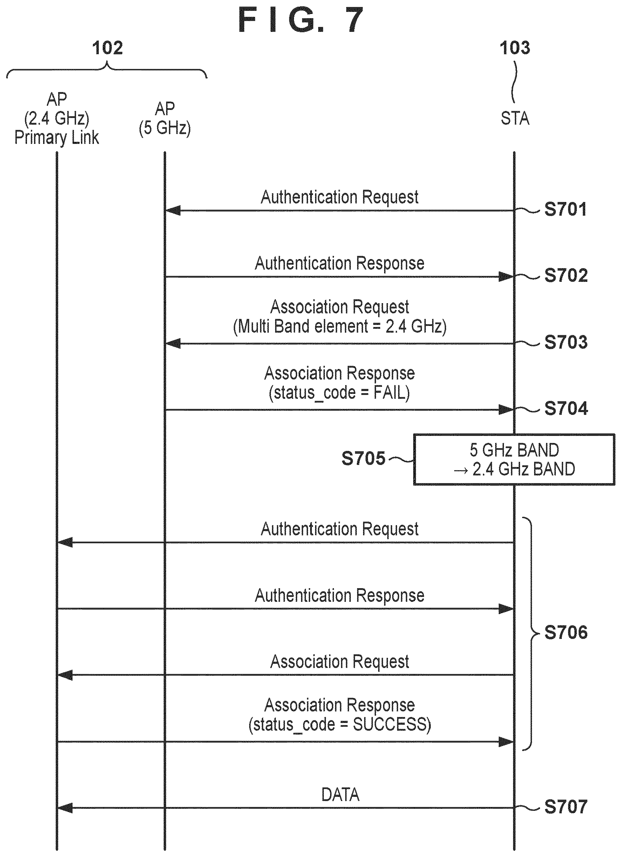

In the processing example 3, the procedure of the processing of transmitting the Probe Response frame to change the operating frequency of the STA 103 after the link is established in the non-primary link has been explained. In this processing example, the STA 103 is caused to attempt link establishment in the primary link without establishing a link in a non-primary link. That is, the AP 102 rejects connection at the time of receiving an Association Request frame from the STA 103 in a non-primary link, and prompts the STA 103 to switch the operating frequency. An example of the procedure of the processing will be described with reference to Fig. 7. Note that in this processing example as well, a Probe Request frame and a Probe Response frame are transmitted/received between the AP 102 and the STA 103 before link establishment processing.

In this processing example as well, the AP 102 and the STA 103 first execute processing for authentication in a non-primary link (S701 and S702). Then, the STA 103 transmits, in the 5-GHz band, an Association Request frame including a Multi Band element indicating information of the frequency band and the channel supported by itself, and requests the AP 102 to perform connection (S703). These processes are the same as those in S601 to S603 of Fig. 6. Upon receiving the Association Request frame, the AP 102 analyzes the frame. The AP 102 recognizes, from the information of the Multi Band element, that the STA 103 is operable in the channel of the primary link. In response to this, the AP 102 transmits, to the STA 103, an Association Response frame in which FAIL indicating a connection failure is set as a status code indicating a connection result (S704). This allows the STA 103 to recognize a connection failure in the 5-GHz band. In response to the connection failure, the STA 103 switches the operating frequency to the 2.4-GHz band (S705). After that, the AP 102 and the STA 103 execute link establishment processing in the 2.4-GHz band (S706), and transmit/receive data after the link is established (S707).

As described above, in the example shown in Fig. 7, the AP 102 causes the STA 103 to switch the operating channel to the channel of the primary link during the link establishment processing. This allows the AP 102 to establish connection to the STA 103 in the channel of the primary link.

### (Processing by AP 102)

Subsequently, an example of the procedure of the processing executed by the AP 102 in the above-described system operation will be described.

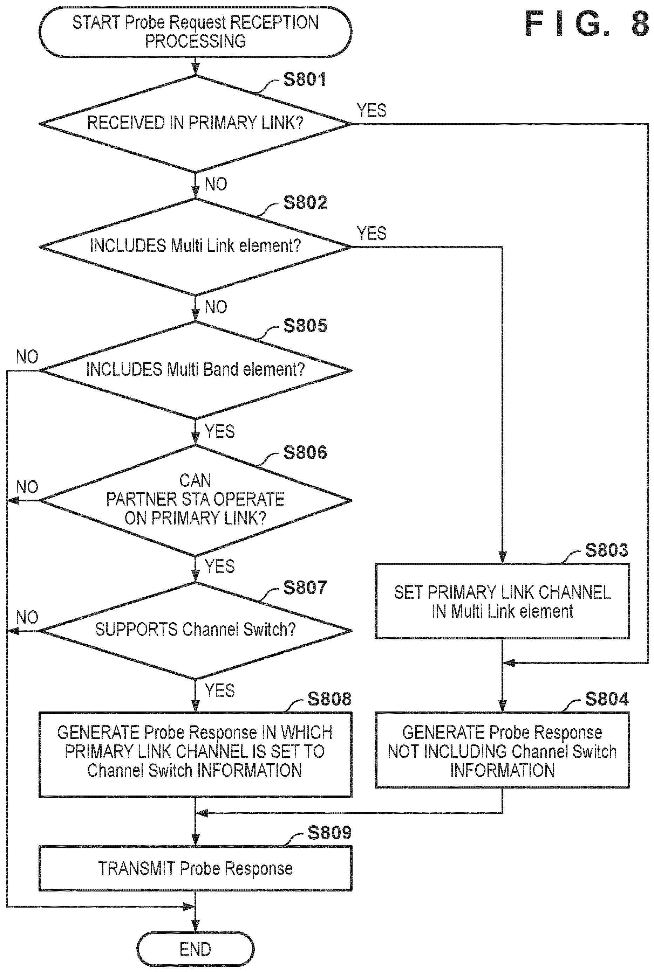

The processing in a case in which the AP 102 causes the STA 103 to change the operating frequency by responding to the Probe Request frame will be described with reference to Fig. 8. First, the AP 102 determines whether the channel in which the Probe Request frame has been received is the channel of the primary link (step S801). If the AP 102 receives the Probe Request frame in the channel of the primary link (YES in step S801), it generates a Probe Response frame without including Channel Switch information (step S804). Then, the AP 102 transmits the generated frame to the STA 103 (step S809), and ends the processing. Note that the Probe Response frame is an example of a frame including information for changing the channel, and another frame may be transmitted in step S809. On the other hand, if the AP 102 receives the Probe Request frame in a channel of a non-primary link (NO in step S801), it determines whether the frame includes a Multi Link element (step S802). If the AP 102 determines that the frame includes a Multi Link element (YES in step S802), it recognizes that the STA supports multi-link communication. In this case, the STA 103 is operable in the channel of the primary link even while operating in the channel of the non-primary link. Therefore, the AP 102 sets the channel of the primary link in the Multi Link element (step S803). Then, the AP 102 generates a Probe Response frame without including Channel Switch information, and transmits the frame to the STA 103 (steps S804 and S809).

On the other hand, if the AP 102 determines that the frame includes no Multi Link element (NO in step S802), it recognizes that the STA which cannot execute multi-link communication has transmitted the Probe Request frame in the channel of the non-primary link. In this case, the AP 102 determines whether the Probe Request frame includes a Multi Band element (step S805). If the AP 102 determines that the Probe Request frame includes no Multi Band element (NO in step S805), the STA 103 is not operable in the channel of the primary link and thus the processing ends directly. In this case, the AP 102 transmits no Probe Response frame, and thus the STA 103 cannot establish a link with the AP 102. On the other hand, if the Probe Request frame includes a Multi Band element (YES in step S805), the AP 102 determines, based on the information, whether the STA 103 is operable in the channel of the primary link (step S806). If the AP 102 determines that the STA 103 is not operable in the channel of the primary link (NO in step S806), the processing ends directly. In this case as well, the AP 102 transmits no Probe Response frame, and thus the STA 103 cannot establish a link with the AP 102. If the AP 102 determines that the STA 103 is operable in the channel of the primary link (YES in step S806), it determines whether the STA 103 supports a channel switch (step S807). If the AP 102 determines that the STA 103 does not support a channel switch (NO in step S807), it cannot transmit an instruction to change the channel to the STA 103, and thus the processing ends directly. In this case as well, the AP 102 transmits no Probe Response frame, and thus the STA 103 cannot establish a link with the AP 102. In this case, however, the STA 103 may be able to change the operating frequency, and transmit a Probe Request frame in the channel of the primary link, thereby establishing a link with the AP 102.

In step S807, if the AP 102 uses, for example, a Channel Switch Announcement element for a channel switch, it determines whether the STA 103 supports the element. In this case, the AP 102 can perform the determination processing by confirming a Spectrum Management bit of a Capability Information field of the Probe Request frame from the STA 103. If the AP 102 uses an Extended Channel Switch Announcement element, it can determine whether the STA 103 supports the element. In this case, the AP 102 can perform the determination processing by confirming an Extended Channel Switching bit of an Extended Capabilities field of the Probe Request frame. By using other capability information, it may be determined by a different method whether the STA 103 supports a channel switch.

If the AP 102 determines that the STA 103 supports a channel switch (YES in step S807), it generates a Probe Response frame in which the channel of the primary link is set as Channel Switch information (step S808). Then, the AP 102 transmits the generated frame to the STA 103 to change the operating frequency of the STA 103 to the frequency band of the primary link. With this operation, the AP 102 can cause the STA 103 that is operable in the channel of the primary link to operate in the channel of the primary link.

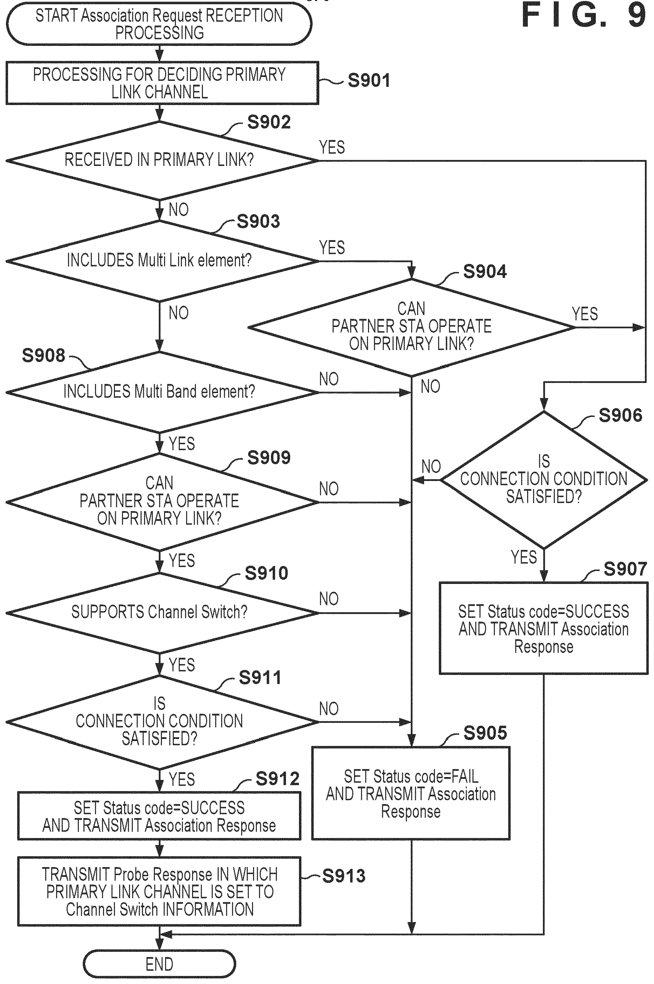

Subsequently, an example of the processing in a case in which the AP 102 causes the STA 103 to change the operating frequency during/after the link establishment processing will be described with reference to Fig. 9. This processing is processing in a case in which the AP 102 receives an Association Request frame. First, the AP 102 executes processing of deciding the channel of the primary link (step S901). In this processing example, the AP 102 decides to fixedly use the channel in the 2.4-GHz band as the channel of the primary link. Note that if the channel of the primary link is fixedly determined, the processing in step S901 may be skipped. Note that before the processing in step S801 of Fig. 8, the processing of deciding the channel of the primary link may also be executed.

The AP 102 determines whether the channel in which the Association Request frame has been received is the channel of the primary link (step S902). If the channel in which the Association Request frame has been received is the channel of the primary link, the AP 102 determines whether the frame includes a Multi Link element (step S903). The AP 102 determines that the STA 103 supports multi-link communication if the frame includes a Multi Link element, and determines that the STA 103 does not support multi-link communication if the frame includes no Multi Link element. If the AP 102 determines that the frame includes a Multi Link element (YES in step S903), the AP 102 determines whether the STA 103 is operable in the channel of the primary link (step S904). For example, the AP 102 can determine, based on the capability information of the STA 103 acquired by the frame such as the Association Request frame, whether the STA 103 is operable in the channel of the primary link.

If the AP 102 determines that the STA 103 is not operable in the channel of the primary link (NO in step S904), the AP 102 cannot change the operating frequency of the STA 103 to the frequency band of the primary link, and thus does not allow connection. That is, the AP 102 transmits, to the STA 103, an Association Response frame in which FAIL is set as a status code, thereby rejecting connection (step S905). On the other hand, if the AP 102 determines that the STA 103 is operable in the channel of the primary link (YES in step S904), the AP 102 determines whether a predetermined connection condition is satisfied (step S906). Note that the determination processing in step S906 can also be executed if the channel in which the Association Request frame has been received is the channel of the primary link (YES in step S902). The connection condition includes, for example, a condition that the number of connected STAs is smaller than the maximum number of STAs that can be accommodated by the AP 102. That is, for example, if the STA 103 is connected to the AP 102, the connection condition includes a condition that a communication service can be provided, in consideration of the fact that it may be impossible to provide the communication service to the STA 103 depending on the capability of the AP 102. If the AP 102 determines that the connection condition is not satisfied (NO in step S906), it transmits, to the STA 103, an Association Response frame in which FAIL is set as a status code, thereby rejecting connection (step S905). On the other hand, if the AP 102 determines that the connection condition is satisfied (YES in step S906), it transmits, to the STA 103, an Association Response frame in which SUCCESS is set as a status code, thereby permitting connection (step S907).

If the AP 102 determines that the Association Request frame includes no Multi Link element (NO in step S903), it determines whether the frame includes a Multi Band element (step S908). If the AP 102 determines that the frame includes a Multi Band element (YES in step S908), it determines whether the STA 103 is operable in the channel of the primary link (step S909). Then, if the AP 102 determines that the STA 103 is operable in the channel of the primary link (YES in step S909), it determines whether the STA 103 supports a channel switch (step S910). This determination processing can be performed based on a value set in the Multi Band element. If the AP 102 determines that the STA 103 supports a channel switch (YES in step S910), it determines whether the connection condition is satisfied (step S911). Note that if the AP 102 determines in steps S908 to S910 that the STA 103 is not operable in the channel of the primary link or that it is impossible to change the operating frequency of the STA 103 to the frequency of the primary link, the AP 102 shifts the process to step S905 to reject connection. If the AP 102 determines that the connection condition is not satisfied (NO in step S911), it also rejects connection (step S905).

If the STA 103 is operable in the channel of the primary link, it is possible to change the operating frequency to the channel of the primary link, and the connection condition is satisfied (YES in step S911), the AP 102 allows connection of the STA 103. The AP 102 transmits, to the STA 103, an Association Response frame in which SUCCESS is set as a status code, thereby permitting connection (step S912). After that, the AP 102 transmits, to the STA 103, a Probe Response frame in which the channel of the primary link is set as Channel Switch information (step S913). This switches connection between the AP 102 and the STA 103 to connection by the primary link.

Note that in the above-described processing, instead of transmitting, in step S905, the Association Response frame in which FAIL is set as the status code, no Association Response frame may be transmitted. In this case, the STA 103 can recognize a connection failure based on the fact that no Association Response frame is received. Note that in response to this, the STA 103 can change the operating frequency to the frequency band of the primary link, and retransmit the Association Request frame, thereby establishing connection.

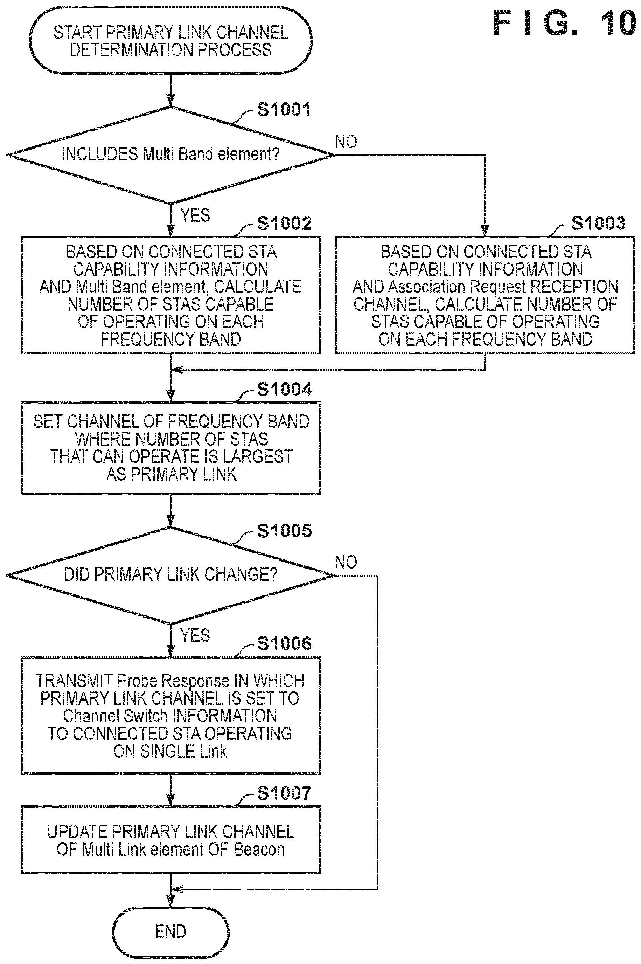

A case in which the channel of the primary link is fixed has been described above. However, for example, the channel of the primary link can dynamically be decided in step S901. The processing of deciding the channel of the primary link in this case will be described with reference to Fig. 10. In this processing, the AP 102 first determines whether the Association Request frame includes a Multi Band element (step S1001). Then, with respect to the STAs currently connected to the AP 102 and the STA 103 as the transmission source of the frame, the AP 102 calculates the number of STAs that are operable in each frequency band (step S1002 or S1003). For example, if the AP 102 determines that the frame includes a Multi Band element (YES in step S1001), it calculates the number of STAs based on the capability information of the STAs currently connected to the self-apparatus and the Multi Band element (step S1002). On the other hand, if the AP 102 determines that the Association Request frame includes no Multi Band element (NO in step S1001), it calculates the number of STAs based on the frequency band in which the frame has been received (step S1003). For example, among the connected STAs, the number of STAs operable in the 2.4-GHz band is three and the number of STAs operable in the 5-GHz band is three. If the STA 103 supports both the 2.4-GHz band and the 5-GHz band, the number of STAs operable in the 2.4-GHz band is calculated as 4 and the number of STAs operable in the 5-GHz band is calculated as 4 in step S1002. If the STA 103 transmits the Association Request frame in the 5-GHz band, the number of STAs operable in the 2.4-GHz band is calculated as 3 and the number of STAs operable in the 5-GHz band is calculated as 4 in step S1003. Then, the AP 102 sets, as the channel of the primary link, the channel in the frequency band in which the number of operable STAs is largest (step S1004).

At this time, the AP 102 determines whether the channel of the primary link set in step S1004 has been changed from the channel of the primary link set before (step S1005). If the channel of the primary link has not been changed (NO in step S1005), the AP 102 directly ends the processing. On the other hand, if the channel of the primary link has been changed (YES in step S1005), the AP 102 executes, for a predetermined STA among the connected STAs, processing for changing the operating frequency. The predetermined STA can be, for example, an STA that operates in a single link complying with a standard, such as the IEEE802.11ax standard, of a version older than the IEEE802.11be standard or an IEEE802.11be STA that is operable only in a single link. The AP 102 transmits, to the predetermined STA, a Probe Response frame in which the changed channel of the primary link is set as Channel Switch information (step S1006). The AP 102 updates, for the STA operating in the multi-link, the channel information of the primary link included in the Multi Link element of the Beacon frame to the changed channel information. This allows the AP 102 to set the appropriate channel of the primary link in accordance with the situation.

Note that if the channel of the primary link is set, it may be unnecessary to change the operating frequency of the STA 103. That is, even if the reception channel is not the channel of the primary link when the Association Request frame is received, the reception channel can be the channel of the primary link by changing the channel of the primary link. Therefore, for example, the determination result in step S902 can change in accordance with the setting of the channel of the primary link in step S901 of Fig. 9.

Note that in the above-described embodiment, the method in the wireless LAN complying with the IEEE802.11 standard series has been described. However, the same discussion is applicable to a communication apparatus that can establish a plurality of radio links. That is, the above-described method can be applied as control for connecting a communication partner having a predetermined characteristic to one of the plurality of radio links. Note that the above-described AP 102 need not always be a communication apparatus that cannot simultaneously execute transmission in one of two or more frequency bands and reception in another frequency band. That is, the AP 102 may determine one frequency band based on a given criterion and execute the above-described processing to cause the STA 103 to operate in the frequency band.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

## Claims

1. A communication apparatus (102) for executing wireless communication complying with an IEEE802.11 standard series, comprising:
communication means (206) for performing multi-link communication, with another communication apparatus (103), using a plurality of links established with the other communication apparatus, wherein each of the plurality of links operates on a distinct channel;
reception means (206) for receiving a Probe Request frame from the other communication apparatus; and
control means (202) for controlling, in order for the other communication apparatus to communicate with the communication apparatus using a first channel, to transmit a Probe Response frame, including information indicating that a switch to the first channel should be performed using a second channel different from the first channel as a response in a case where the Probe Request frame is received in a second channel different from a first channel,
wherein the information indicating that a switch to the first channel should be performed is one of a Channel Switch Announcement element and an Extended Channel Switch Announcement element.

2. The communication apparatus (102) according to claim 1, wherein in a case where the other communication apparatus (103) is operable in the first channel, the control means (202) executes control to transmit, to the other communication apparatus, the Probe Response frame including the information indicating that a switch to the first channel should be performed, and in a case where the other communication apparatus is not operable in the first channel, the control means does not execute the control.

3. The communication apparatus (102) according to claim 2, wherein the control means (202) determines, based on the information included in the Probe Request frame, whether the other communication apparatus (103) is operable in the first channel.

4. The communication apparatus (102) according to any one of claims1 to 3, wherein in a case where the other communication apparatus (103) supports a channel switch, the control means (202) executes control to transmit, to the other communication apparatus, the Probe Response frame including the information indicating that a switch to the first channel should be performed, and in a case where the other communication apparatus does not support a channel switch, the control means does not execute the control.

5. The communication apparatus (102) according to claim 4, wherein the control means (202) determines, based on the information included in the Probe Request frame, whether the other communication apparatus (103) supports a channel switch.

6. The communication apparatus (102) according to any one of claims 1 to 5, further comprising decision means (305) for deciding the first channel from a plurality of channels usable by the communication apparatus.

7. The communication apparatus (102) according to claim 6, wherein the decision means (305) decides the first channel based on the number of apparatuses that are operable in each of the plurality of channels, among other apparatuses connected to the communication apparatus, and a channel in which the other communication apparatus is operable.

8. The communication apparatus (102) according to claim 7, wherein the decision means (305) decides the first channel based on the number of apparatuses that are operable in each of the plurality of channels, among other apparatuses connected to the communication apparatus, and a channel in which the Probe Request frame has been received.

9. The communication apparatus (102) according to claim 7 or 8, wherein in a case where the first channel is changed, the control means further executes control to transmit, to the connected other apparatuses, information indicating that a switch to the changed first channel should be performed.

10. The communication apparatus (102) according to any one of claims 7 to 9, wherein in a case where the first channel is changed, the control means (202) further executes control to transmit a Beacon frame by including the changed first channel.

11. The communication apparatus (102) according to any one of claims 1 to 10, wherein the communication apparatus is a communication apparatus that can perform communication using both the first channel and the second channel but, while performing transmission using one of the first channel and the second channel, cannot perform reception using the other of the first channel and the second channel.

12. The communication apparatus (102) according to any one of claims 1 to 11, wherein the first channel is a channel in a first frequency band, and the second channel is a channel in a second frequency band.

13. A control method executed by a communication apparatus (102) for executing wireless communication complying with an IEEE802.11 standard series, comprising:
performing multi-link communication, with another communication apparatus (103), using a plurality of links established with the other communication apparatus, wherein each of the plurality of links operates on a distinct channel;
receiving a Probe Request frame (S401) from the other communication apparatus; and
controlling, in order for the other communication apparatus to communicate with the communication apparatus using a first channel, to transmit Probe Response frame (S402), including information indicating that a switch to the first channel should be performed using a second channel different from the first channel as a response in a case where the Probe Request frame is received in a second channel different from a first channel,
wherein the information indicating that a switch to the first channel should be performed is one of a Channel Switch Announcement element and an Extended Channel Switch Announcement element.

14. A program for causing a computer to function as a communication apparatus defined in any one of claims 1 to 12.

## Patentansprüche

1. Kommunikationsvorrichtung (102) zum Ausführen einer drahtlosen Kommunikation, die einer IEEE802.11-Standardreihe entspricht, umfassend:
eine Kommunikationseinrichtung (206) zum Durchführen einer Mehrverbindungskommunikation mit einer anderen Kommunikationsvorrichtung (103) unter Verwendung von mehreren Verbindungen, die zur anderen Kommunikationsvorrichtung eingerichtet sind, wobei eine jeweilige der mehreren Verbindungen auf einem separaten Kanal arbeitet;
eine Empfangseinrichtung (206) zum Empfangen eines Probe-Request-Frames von der anderen Kommunikationsvorrichtung; und
eine Steuereinrichtung (202) zum Steuern, damit die andere Kommunikationsvorrichtung mit der Kommunikationsvorrichtung unter Verwendung eines ersten Kanals kommuniziert, einen Probe-Response-Frame zu übertragen, der Informationen enthält, die angeben, dass ein Wechsel zum ersten Kanal unter Verwendung eines zweiten Kanals, der sich von dem ersten Kanal unterscheidet, als Antwort durchgeführt werden sollte, falls der Probe-Request-Frame in einem zweiten Kanal empfangen wird, der sich von einem ersten Kanal unterscheidet,
wobei die Informationen, die angeben, dass ein Wechsel zu dem ersten Kanal durchgeführt werden sollte, ein Channel-Switch-Announcement-Element oder ein Extended-Channel-Switch-Announcement-Element sind.

2. Kommunikationsvorrichtung (102) nach Anspruch 1, wobei in einem Fall, in dem die andere Kommunikationsvorrichtung (103) in dem ersten Kanal betreibbar ist, die Steuereinrichtung (202) eine Steuerung ausführt, um an die andere Kommunikationsvorrichtung den Probe-Response-Frame zu übertragen, der die Informationen enthält, die angeben, dass ein Wechsel zum ersten Kanal durchgeführt werden sollte, und in einem Fall, in dem die andere Kommunikationsvorrichtung nicht in dem ersten Kanal betreibbar ist, die Steuereinrichtung die Steuerung nicht ausführt.

3. Kommunikationsvorrichtung (102) nach Anspruch 2, wobei die Steuereinrichtung (202) basierend auf den in dem Probe-Request-Frame enthaltenen Informationen bestimmt, ob die andere Kommunikationsvorrichtung (103) in dem ersten Kanal betreibbar ist.

4. Kommunikationsvorrichtung (102) nach einem der Ansprüche 1 bis 3, wobei in einem Fall, in dem die andere Kommunikationsvorrichtung (103) einen Kanalwechsel unterstützt, die Steuereinrichtung (202) eine Steuerung ausführt, um an die andere Kommunikationsvorrichtung den Probe-Response-Frame zu übertragen, der die Informationen enthält, die angeben, dass ein Wechsel zu dem ersten Kanal durchgeführt werden sollte, und in einem Fall, in dem die andere Kommunikationsvorrichtung keinen Kanalwechsel unterstützt, die Steuereinrichtung die Steuerung nicht ausführt.

5. Kommunikationsvorrichtung (102) nach Anspruch 4, wobei die Steuereinrichtung (202) basierend auf den in dem Probe-Request-Frame enthaltenen Informationen bestimmt, ob die andere Kommunikationsvorrichtung (103) einen Kanalwechsel unterstützt.

6. Kommunikationsvorrichtung (102) nach einem der Ansprüche 1 bis 5, ferner umfassend eine Festlegungseinrichtung (305) zum Festlegen des ersten Kanals aus mehreren Kanälen, die durch die Kommunikationsvorrichtung verwendbar sind.

7. Kommunikationsvorrichtung (102) nach Anspruch 6, wobei die Festlegungseinrichtung (305) den ersten Kanal basierend auf der Anzahl von Vorrichtungen, die in einem jeweiligen der mehreren Kanäle betreibbar sind, unter anderen Vorrichtungen, die mit der Kommunikationsvorrichtung verbunden sind, und einem Kanal, in dem die andere Kommunikationsvorrichtung betreibbar ist, festlegt.

8. Kommunikationsvorrichtung (102) nach Anspruch 7, wobei die Festlegungseinrichtung (305) den ersten Kanal basierend auf der Anzahl von Vorrichtungen, die in einem jeweiligen der mehreren Kanäle betreibbar sind, unter anderen Vorrichtungen, die mit der Kommunikationsvorrichtung verbunden sind, und einem Kanal, in dem der Probe-Request-Frame empfangen wurde, festlegt.

9. Kommunikationsvorrichtung (102) nach Anspruch 7 oder 8, wobei in einem Fall, in dem der erste Kanal geändert wird, die Steuereinrichtung ferner eine Steuerung ausführt, um an die verbundenen anderen Vorrichtungen Informationen zu übertragen, die angeben, dass ein Wechsel zu dem geänderten ersten Kanal durchgeführt werden sollte.

10. Kommunikationsvorrichtung (102) nach einem der Ansprüche 7 bis 9, wobei in einem Fall, in dem der erste Kanal geändert wird, die Steuereinrichtung (202) ferner eine Steuerung ausführt, um einen Beacon-Frame zu übertragen, indem sie den geänderten ersten Kanal mit einschließt.

11. Kommunikationsvorrichtung (102) nach einem der Ansprüche 1 bis 10, wobei die Kommunikationsvorrichtung eine Kommunikationsvorrichtung ist, die eine Kommunikation unter Verwendung sowohl des ersten Kanals als auch des zweiten Kanals durchführen kann, aber, während sie eine Übertragung unter Verwendung eines von dem ersten Kanal und dem zweiten Kanal durchführt, keinen Empfang unter Verwendung des anderen von dem ersten Kanal und dem zweiten Kanal durchführen kann.

12. Kommunikationsvorrichtung (102) nach einem der Ansprüche 1 bis 11, wobei der erste Kanal ein Kanal in einem ersten Frequenzband ist und der zweite Kanal ein Kanal in einem zweiten Frequenzband ist.

13. Steuerverfahren, das durch eine Kommunikationsvorrichtung (102) zum Ausführen einer drahtlosen Kommunikation, die einer IEEE802.11-Standardreihe entspricht, ausgeführt wird, umfassend:
Durchführen einer Mehrverbindungskommunikation mit einer anderen Kommunikationsvorrichtung (103) unter Verwendung von mehreren Verbindungen, die zur anderen Kommunikationsvorrichtung eingerichtet sind, wobei eine jeweilige der mehreren Verbindungen auf einem separaten Kanal arbeitet;
Empfangen eines Probe-Request-Frames (S401) von der anderen Kommunikationsvorrichtung; und
Steuern, damit die andere Kommunikationsvorrichtung mit der Kommunikationsvorrichtung unter Verwendung eines ersten Kanals kommuniziert, um einen Probe-Response-Frame (S402) zu übertragen, der Informationen enthält, die angeben, dass ein Wechsel zum ersten Kanal unter Verwendung eines zweiten Kanals, der sich vom ersten Kanal unterscheidet, als Antwort durchgeführt werden sollte, falls der Probe-Request-Frame in einem zweiten Kanal empfangen wird, der sich von einem ersten Kanal unterscheidet,
wobei die Informationen, die angeben, dass ein Wechsel zum ersten Kanal durchgeführt werden sollte, ein Channel-Switch-Announcement-Element oder ein Extended-Channel-Switch-Announcement-Element sind.

14. Programm zum Veranlassen, dass ein Computer als eine Kommunikationsvorrichtung funktioniert, die in einem der Ansprüche 1 bis 12 definiert ist.

## Revendications

1. Appareil de communication (102) pour exécuter une communication sans fil conforme à une série de normes IEEE802.11, comprenant :
des moyens de communication (206) pour réaliser une communication multi-liaisons, avec un autre appareil de communication (103), à l'aide d'une pluralité de liaisons établies avec l'autre appareil de communication, dans lequel chacune de la pluralité de liaisons fonctionne sur un canal distinct ;
des moyens de réception (206) pour recevoir une trame de requête de sonde en provenance de l'autre appareil de communication ; et
des moyens de commande (202) pour commander, afin que l'autre appareil de communication communique avec l'appareil de communication à l'aide d'un premier canal, la transmission d'une trame de réponse de sonde, incluant des informations indiquant qu'une commutation vers le premier canal doit être réalisée à l'aide d'un second canal différent du premier canal comme réponse dans un cas où la trame de requête de sonde est reçue dans un second canal différent d'un premier canal,
dans lequel les informations indiquant qu'une commutation vers le premier canal doit être réalisée sont l'un parmi un élément d'annonce de commutation de canal et un élément d'annonce de commutation de canal étendu.

2. Appareil de communication (102) selon la revendication 1, dans lequel, dans un cas où l'autre appareil de communication (103) est opérationnel dans le premier canal, les moyens de commande (202) exécutent une commande pour transmettre, à l'autre appareil de communication, la trame de réponse de sonde comportant les informations indiquant qu'une commutation vers le premier canal doit être réalisée, et dans un cas où l'autre appareil de communication n'est pas opérationnel dans le premier canal, les moyens de commande n'exécutent pas la commande.

3. Appareil de communication (102) selon la revendication 2, dans lequel les moyens de commande (202) déterminent, sur la base des informations incluses dans la trame de requête de sonde, si l'autre appareil de communication (103) est opérationnel dans le premier canal.

4. Appareil de communication (102) selon l'une quelconque des revendications 1 à 3, dans lequel, dans un cas où l'autre appareil de communication (103) prend en charge une commutation de canal, les moyens de commande (202) exécutent une commande pour transmettre, à l'autre appareil de communication, la trame de réponse de sonde comportant les informations indiquant qu'une commutation vers le premier canal doit être réalisée, et dans un cas où l'autre appareil de communication ne prend pas en charge une commutation de canal, les moyens de commande n'exécutent pas la commande.

5. Appareil de communication (102) selon la revendication 4, dans lequel les moyens de commande (202) déterminent, sur la base des informations incluses dans la trame de requête de sonde, si l'autre appareil de communication (103) prend en charge une commutation de canal.

6. Appareil de communication (102) selon l'une quelconque des revendications 1 à 5, comprenant en outre des moyens de décision (305) pour décider du premier canal parmi une pluralité de canaux utilisables par l'appareil de communication.

7. Appareil de communication (102) selon la revendication 6, dans lequel les moyens de décision (305) décident du premier canal sur la base du nombre d'appareils qui sont opérationnels dans chacun de la pluralité de canaux, parmi d'autres appareils connectés à l'appareil de communication, et d'un canal dans lequel l'autre appareil de communication est opérationnel.

8. Appareil de communication (102) selon la revendication 7, dans lequel les moyens de décision (305) décident du premier canal sur la base du nombre d'appareils qui sont opérationnels dans chacun de la pluralité de canaux, parmi d'autres appareils connectés à l'appareil de communication, et d'un canal dans lequel la trame de requête de sonde a été reçue.

9. Appareil de communication (102) selon la revendication 7 ou 8, dans lequel, dans un cas où le premier canal est modifié, les moyens de commande exécutent en outre une commande pour transmettre, aux autres appareils connectés, des informations indiquant qu'une commutation vers le premier canal modifié doit être réalisée.

10. Appareil de communication (102) selon l'une quelconque des revendications 7 à 9, dans lequel, dans un cas où le premier canal est modifié, les moyens de commande (202) exécutent en outre une commande pour transmettre une trame de balise en incluant le premier canal modifié.

11. Appareil de communication (102) selon l'une quelconque des revendications 1 à 10, dans lequel l'appareil de communication est un appareil de communication qui peut réaliser une communication à l'aide à la fois du premier canal et du second canal mais, pendant la réalisation d'une transmission à l'aide de l'un du premier canal et du second canal, ne peut pas réaliser une réception à l'aide de l'autre du premier canal et du second canal.

12. Appareil de communication (102) selon l'une quelconque des revendications 1 à 11, dans lequel le premier canal est un canal dans une première bande de fréquences, et le second canal est un canal dans une second bande de fréquences.

13. Procédé de commande exécuté par un appareil de communication (102) pour exécuter une communication sans fil conforme à une série de normes IEEE802.11, comprenant :
la réalisation d'une communication multi-liaisons, avec un autre appareil de communication (103), à l'aide d'une pluralité de liaisons établies avec l'autre appareil de communication, dans lequel chacune de la pluralité de liaisons fonctionne sur un canal distinct ;
la réception d'une trame de requête de sonde (S401) en provenance de l'autre appareil de communication ; et
la commande, afin que l'autre appareil de communication communique avec l'appareil de communication à l'aide d'un premier canal, de transmettre une trame de réponse de sonde (S402), comportant des informations indiquant qu'une commutation vers le premier canal doit être réalisée à l'aide d'un second canal différent du premier canal en tant que réponse dans un cas où la trame de requête de sonde est reçue dans un second canal différent d'un premier canal,
dans lequel les informations indiquant qu'une commutation vers le premier canal doit être réalisée sont l'un parmi un élément d'annonce de commutation de canal et un élément d'annonce de commutation de canal étendu.

14. Programme pour amener un ordinateur à fonctionner comme un appareil de communication selon l'une quelconque des revendications 1 à 12.
